(19) Europäisches Patentamt
European Patent Office
Office européen des brevets

(11) **EP 2 061 961 B1**

(12) **FASCICULE DE BREVET EUROPEEN**

(45) Date de publication et mention de la délivrance du brevet:
**03.10.2012 Bulletin 2012/40**

(51) Int Cl.:
*F02D 21/08* (2006.01)   *F02D 35/00* (2006.01)
*F02D 41/00* (2006.01)

(21) Numéro de dépôt: **07823681.7**

(22) Date de dépôt: **02.08.2007**

(86) Numéro de dépôt international:
**PCT/FR2007/051771**

(87) Numéro de publication internationale:
**WO 2008/031960 (20.03.2008 Gazette 2008/12)**

(54) **SYSTEME DE COMMANDE POUR L'ESTIMATION DU DEBIT D'AIR FRAIS ENTRANT DANS UN MOTEUR A COMBUSTION INTERNE ET PROCEDE ASSOCIE**

STEUERSYSTEM ZUR SCHÄTZUNG DES IN EINEN VERBRENNUNGSMOTOR EINSTRÖMENDEN FRISCHLUFTSTROMS SOWIE ENTSPRECHENDES VERFAHREN

CONTROL SYSTEM FOR ESTIMATING THE FRESH AIR FLOW ENTERING AN INTERNAL COMBUSTION ENGINE, AND METHOD THEREFOR

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.09.2006 FR 0608082**

(43) Date de publication de la demande:
**27.05.2009 Bulletin 2009/22**

(73) Titulaire: **Renault SAS**
**92100 Boulogne Billancourt (FR)**

(72) Inventeurs:
• **FONTVIEILLE, Laurent**
**91190 Gif Sur Yvette (FR)**
• **QUETELART, Florent**
**91760 Itteville (FR)**

(56) Documents cités:
**WO-A1-01/75287     DE-A1- 4 211 851**
**US-A- 6 115 664     US-A1- 2004 065 303**

EP 2 061 961 B1

**Description**

La présente invention a pour objet un système et un procédé de calcul du débit d'air frais admis dans un moteur à combustion interne de véhicule automobile, notamment de type Diesel. La gestion de la commande de fonctionnement d'un tel moteur est généralement assurée par une unité de commande électronique dite « UCE ». L'unité de commande électronique regroupe notamment l'ensemble des moyens de calcul nécessaires à l'estimation du débit d'air frais. Elle est reliée à un ensemble de capteurs et d'actionneurs permettant de contrôler le fonctionnement du moteur.

La recirculation partielle des gaz d'échappement (EGR, de l'anglais Exhaust Gaz Recirculation) permet de recycler une partie des gaz d'échappement en les réinjectant dans les gaz admis dans le moteur de façon à en modifier la composition pour diminuer les rejets polluants. Ce recyclage partiel des gaz d'échappement peut être réalisé de deux manières différentes.

La première est la recirculation partielle des gaz d'échappement dite haute pression, dans laquelle les gaz sont prélevés à la sortie du collecteur d'échappement et réinjectés dans le collecteur d'admission, soit après le compresseur et dans la partie haute pression du moteur.

La deuxième est la recirculation partielle des gaz d'échappement dite basse pression, dans laquelle les gaz sont prélevés en sortie de la turbine et réinjectés avant le compresseur, dans la partie à pression atmosphérique du moteur.

Dans le cadre de cette invention, on s'attachera plus particulièrement au cas de la recirculation partielle des gaz d'échappement à basse pression, sans toutefois se limiter à ce cas. Le circuit de recirculation partielle des gaz d'échappement est composé d'une vanne d'échappement, d'une vanne de recirculation partielle des gaz d'échappement et d'un refroidisseur. Les deux vannes permettent de contrôler le taux de recirculation partielle des gaz d'échappement. Fixer un taux de recirculation partielle des gaz d'échappement trop élevé risque d'augmenter la génération de fumées dans le cas des moteurs de type Diesel. Cependant plus le taux de recirculation partielle des gaz d'échappement est grand, plus l'émission d'oxydes d'azote est réduite, un compromis entre ces deux paramètres est donc nécessaire. Pour optimiser ce taux de recirculation partielle des gaz d'échappement et obtenir un taux acceptable de polluants, il est nécessaire de connaître avec précision le débit d'air entrant dans le moteur.

Pour cela, on a généralement recours à un débitmètre, permettant de traduire un débit de gaz en information électrique comme un courant ou une tension. Plusieurs types de débitmètres existent, parmi lesquels on peut citer le capteur à fil chaud. Ce capteur est composé essentiellement d'un fil chauffé par le passage d'un courant électrique et plongé dans le flux du gaz à mesurer. Après la calibration du capteur, une variation de débit du gaz se traduit par une variation de courant dans le fil, qui peut ensuite être numérisée et analysée. Cependant, un tel capteur est soumis à de nombreux inconvénients, tels que son coût, les perturbations du signal de mesure, les perturbations dues aux retours d'ondes de pression, les difficultés de calibration, les dérives et dispersions des mesures ainsi que, dans le cas d'une recirculation partielle des gaz d'échappement à basse pression, les risques d'encrassement liés à la proximité du point d'injection des gaz recirculés.

On a également envisagé de se passer de débitmètre et d'utiliser un autre moyen pour estimer le débit d'air admis dans le moteur. Plusieurs solutions techniques existent.

On peut calculer le débit total d'air aspiré à partir de la pression et de la température de l'air dans le collecteur d'admission ainsi que du régime moteur. Ce calcul n'est plus possible en présence de recirculation des gaz d'échappement, le débit d'air total aspiré par le moteur n'étant plus égal au débit d'air admis dans le moteur du fait de la présence d'un débit de gaz d'échappement partiellement recirculés.

La détermination de l'excès d'air admis pour une quantité de carburant injectée en utilisant une sonde à oxygène dans la tubulure d'échappement est également possible mais réintroduit la nécessité d'un capteur coûteux, ainsi qu'un retard induit par la localisation du capteur, notamment lors des changements de régime.

Plusieurs demandes de brevet (FR2789731, FR2824596, FR2833648 et FR2824596) décrivent des méthodes de calcul basées sur la formule de Barré de Saint-Venant. Cependant, toutes ces méthodes sont complexes et s'avèrent en outre inapplicables pour une recirculation partielle des gaz d'échappement à basse pression.

La présente invention a pour objet un système et un procédé permettant d'estimer, sans débitmètre, le débit d'air admis dans un moteur à combustion interne, notamment un moteur équipé d'une recirculation partielle des gaz d'échappement à basse pression.

L'invention a également pour objet la définition des moyens de calculs permettant de réduire le nombre de capteurs de température et de pression nécessaires à la détermination du débit d'air.

Dans un mode de réalisation, un système de commande d'un moteur à combustion interne, équipé d'un turbocompresseur et d'un circuit de recirculation partielle des gaz d'échappement comprend une unité de contrôle électronique.

L'unité de contrôle électronique (UCE) comprend des moyens de commande du débit de la recirculation partielle des gaz d'échappement et des moyens de calcul qui reçoivent les signaux de capteurs de température et de pression. L'unité de commande électronique comprend également un moyen pour calculer le débit d'air admis dans le moteur ainsi qu'un moyen pour calculer le débit des gaz en entrée du compresseur, à partir d'un ensemble de valeurs de températures et de pressions des gaz circulant dans différents organes du moteur.

Dans un mode de réalisation préféré, le circuit de recirculation partielle des gaz d'échappement permet une recirculation de ces gaz d'échappement à basse pression et est équipé d'un refroidisseur. Le moyen de calcul du débit des gaz en entrée du compresseur utilise des valeurs mesurées de la température et de la pression des gaz dans le collecteur d'admission.

Le moyen de calcul du débit d'air admis dans le moteur peut utiliser des valeurs mesurées de la température de l'air admis dans le moteur, de la température des gaz à l'entrée du compresseur, de la température des gaz en sortie du refroidisseur du circuit de recirculation partielle des gaz d'échappement basse pression et la valeur estimée par le moyen de calcul du débit des gaz en entrée du compresseur.

Dans un mode de réalisation, le circuit de recirculation partielle des gaz d'échappement comprend un volet d'échappement et l'unité de commande électronique comprend également des moyens de détermination de la température des gaz en sortie du refroidisseur du circuit de recirculation partielle des gaz d'échappement à basse pression en fonction de la température mesurée des gaz en amont du volet d'échappement.

L'unité de commande électronique peut comprendre également des moyens de détermination de la température des gaz en sortie du compresseur en fonction de la température mesurée des gaz dans le collecteur d'admission.

L'unité de commande électronique peut comprendre également des moyens de détermination de la température des gaz à l'entrée du compresseur en fonction de la température estimée des gaz en sortie du compresseur.

Dans un mode de réalisation, le moyen de calcul du débit d'air admis dans le moteur utilise la valeur mesurée de la température de l'air admis dans le moteur et les valeurs estimées de la température des gaz à l'entrée du compresseur, de la température des gaz en sortie du refroidisseur du circuit de recirculation partielle des gaz d'échappement à basse pression et de la valeur estimée du débit des gaz en entrée du compresseur.

Selon un autre aspect de l'invention, un procédé de commande d'un moteur à combustion interne suralimenté avec recirculation partielle et refroidissement des gaz d'échappement (EGR), consiste à estimer le débit des gaz en entrée du compresseur et le débit d'air admis dans le moteur, à partir d'un ensemble de valeurs de températures et de pressions des gaz circulant dans différents organes du moteur.

Dans un autre mode de mise en oeuvre, le procédé de commande peut utiliser, en lieu et place des valeurs mesurées, des valeurs estimées de la température des gaz d'échappement après refroidissement, de la température des gaz en sortie du compresseur de suralimentation et de la température des gaz en entrée du compresseur.

D'autres buts, caractéristiques et avantages de l'invention apparaîtront à la lecture de la description suivante, donnée uniquement à titre d'exemple non limitatif et faite en référence aux dessins annexés sur lesquels :

la figure 1 représente schématiquement les principaux éléments d'un système selon l'invention dans lequel on estime le débit d'air admis dans le moteur à partir de mesures de températures et de pressions ; et

la figure 2 représente schématiquement les principaux éléments selon un autre mode de réalisation de l'invention dans lequel on estime le débit d'air admis dans le moteur à partir d'un jeu réduit de mesures, les mesures manquantes étant également estimées.

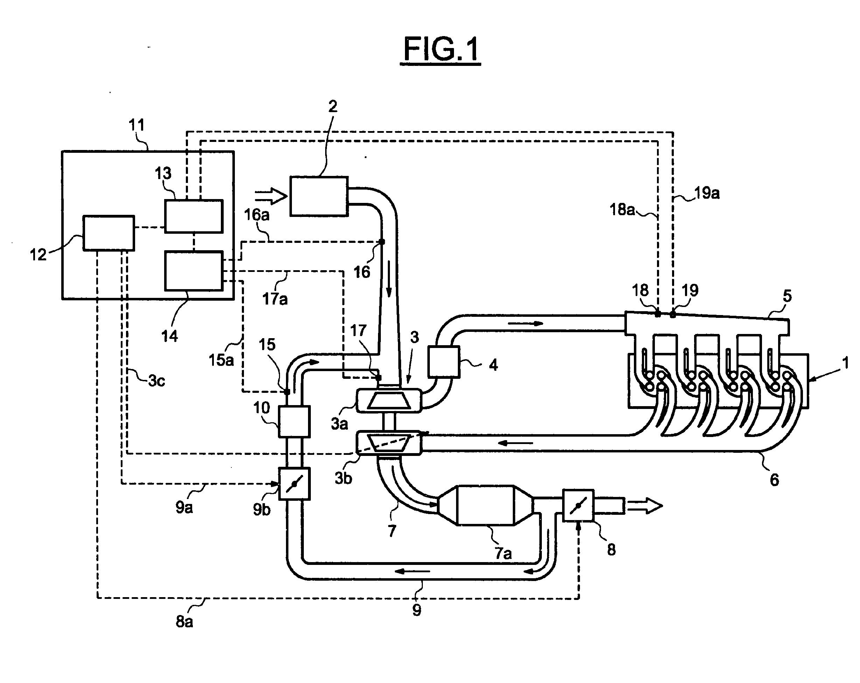

La figure 1 est une vue schématique d'un moteur 1 à combustion interne du type Diesel. L'air admis dans le moteur passe d'abord à travers un filtre à air 2 puis à travers un compresseur 3a d'un turbocompresseur 3. Le turbocompresseur 3 est composé d'un compresseur 3a et d'une turbine 3b disposés sur le même axe. L'air ainsi comprimé passe à travers un échangeur d'air d'admission (RAS) référencé 4, en vue de son refroidissement avant d'être admis dans le moteur 1 via le collecteur d'admission 5. Les gaz issus de la combustion sont rejetés via le collecteur d'échappement 6 et entraînent la turbine 3b. Ils sont ensuite évacués via une conduite d'échappement 7 et un filtre à particules 7a pour être rejetés à l'extérieur. Une partie de ces gaz d'échappement est prélevée en sortie du filtre à particule 7a par une dérivation 9. Les gaz ainsi prélevés sont à une pression inférieure à la pression des gaz dans les collecteurs d'admission et d'échappement. Une telle recirculation est alors qualifiée de recirculation partielle des gaz d'échappement basse pression. Une vanne 8 d'échappement permet de régler la pression des gaz dans la dérivation 9 de recirculation partielle des gaz d'échappement. Les gaz ainsi recirculés traversent une vanne 9b de recirculation partielle des gaz d'échappement permettant de réguler le taux de recirculation partielle des gaz d'échappement. Enfin, dans l'exemple illustré, les gaz d'échappement traversent un refroidisseur 10 avant d'être réinjectés en amont du compresseur 3a, en mélange avec l'air frais provenant du filtre à air 2. Une unité de contrôle électronique référencée 11 comprend un moyen de commande 12, un moyen de calcul 13 du débit des gaz en entrée du compresseur et un moyen de calcul 14 du débit d'air admis dans le moteur.

Le moyen de commande 12 commande la vitesse de rotation de la turbine 3b via l'orientation des pales de la turbine 3b ou le contrôle d'une soupape de décharge non illustrée sur la figure grâce à la liaison 3c, le moyen 12 est également relié à la vanne 8 d'échappement par la connexion 8a et à la vanne 9b de recirculation partielle des gaz d'échappement par la connexion 9a.

Le moyen de calcul 13 est relié au capteur 18 de température et au capteur 19 de pression des gaz circulants dans le collecteur d'admission par les connexions respectives 18a et 19a. Le moyen de calcul 13 détermine alors le débit ($Q_{comp}$) des gaz en entrée du compresseur avec la formule suivante :

$$Q_{comp} = 3600 \times \left[ \frac{P_{col}}{R \cdot T_{col}} \frac{V_{Cyl}}{2} \frac{N}{60} \eta_r \left( N, \frac{P_{col}}{R \cdot T_{col}} \right) - \frac{d}{dt} \left( \frac{P_{col} \cdot V_{sural}}{R \cdot T_{col}} \right) \right]$$

Avec

R = Constante de l'air
$V_{cyl}$ = Cylindrée du moteur
N = Régime de rotation du moteur
$\eta_r$ = Rendement volumique du moteur
$P_{col}$ = Pression des gaz dans le collecteur d'admission
$T_{col}$ = Température des gaz dans le collecteur d'admission
$V_{sural}$ = Volume du circuit de suralimentation compris entre la sortie du compresseur et l'entrée de la turbine
$Q_{comp}$ = Débit des gaz en entrée du compresseur

Ce calcul peut être compris comme étant la somme d'un débit et d'un terme de correction dû à la durée de transit des gaz dans le circuit de suralimentation. Cette correction n'apparaît que dans les régimes transitoires d'établissement ou de rupture du régime stationnaire.

Le moyen de calcul 14 est relié au capteur 15 de température des gaz en sortie du refroidisseur, au capteur 16 de l'air admis dans le moteur et au capteur 17 de température des gaz à l'entrée du compresseur par les liaisons respectives 15a, 16a et 17a. La valeur de ($Q_{comp}$) estimée par le moyen 13 est également communiquée au moyen de calcul 14 qui détermine alors le débit ($Q_{air}$) d'air admis dans le moteur avec la formule suivante :

$$Q_{air} = \frac{C_{p,ech} Q_{comp} \left( T_{comp} - T_{refroid} \right)}{C_{p,air} \left( T_{air} - T_{comp} \right) + C_{p,ech} \left( T_{comp} - T_{refroid} \right)}$$

Avec

$Q_{air}$ = Débit d'air admis dans le moteur estimé
$C_{p,air}$ = Chaleur spécifique de l'air
$C_{p,ech}$ = Chaleur spécifique des gaz d'échappement
$Q_{comp}$ = Débit des gaz en entrée du compresseur
$T_{refroid}$ = Température des gaz à la sortie du refroidisseur de la recirculation partielle des gaz d'échappement
$T_{air}$ = Température de l'air admis dans le moteur
$T_{comp}$ = Température des gaz à l'entrée du compresseur
$Q_{air}$ = Débit d'air admis dans le moteur estimé

Grâce à ce calcul, le débit d'air frais admis dans le moteur peut être calculé avec un nombre réduit de capteurs et une précision comparable à un capteur dédié.

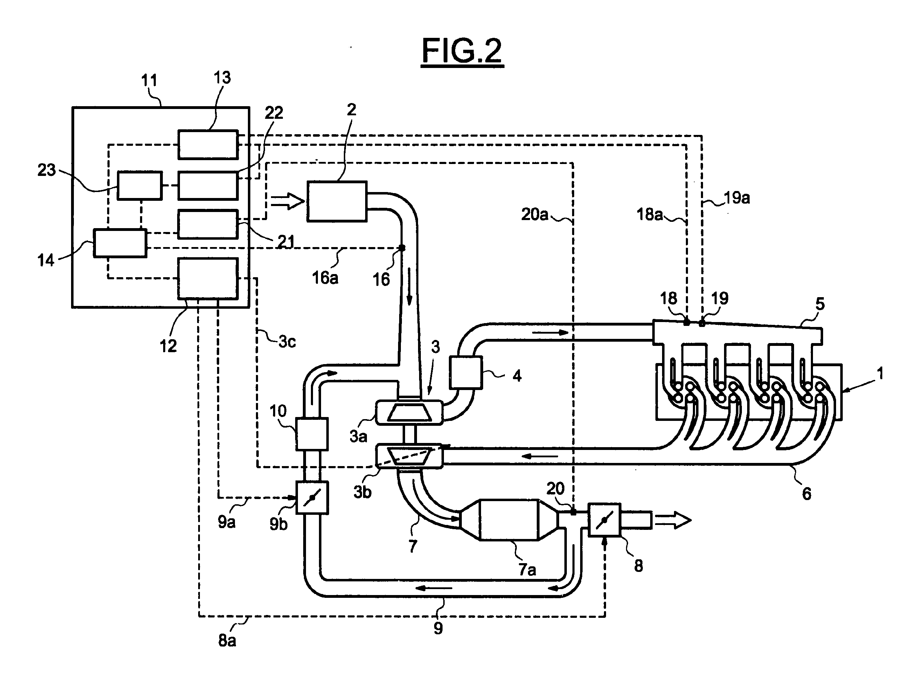

La figure 2, sur laquelle les organes similaires portent les mêmes références, détaille un autre mode de réalisation. La circulation des gaz et le principe de fonctionnement restent les mêmes, mais le nombre et le placement des capteurs diffèrent. L'unité de contrôle électronique référencée 11 comprend en plus du moyen de commande 12, et des moyens de calcul 13 et 14, un moyen de calcul 21 de la température des gaz en sortie du refroidisseur 10, un moyen de calcul 22 de la température des gaz en sortie du compresseur 3a et un moyen de calcul 23 de la température des gaz en entrée du compresseur 3a.

Le moyen de commande 21 est relié au capteur 20 de température des gaz en amont de la vanne 8 d'échappement par la connexion 20a. Le moyen de calcul 21 effectue alors le calcul suivant :

$$T_{refroid} = T_{echap} - \varepsilon_{EGR\_BP} (T_{echap} - T_{eau})$$

Avec

$T_{refroid}$ = Température des gaz à la sortie du refroidisseur de la recirculation partielle des gaz d'échappement
$T_{echap}$ = Température des gaz avant le volet d'échappement
$\varepsilon_{EGR\_BP}$ = Efficacité du refroidisseur
$T_{eau}$ = Température de l'eau du refroidisseur

Le moyen de commande 22 est relié au capteur 18 de température des gaz circulants dans le collecteur d'admission 5. Le moyen de calcul 22 effectue le calcul suivant :

$$T_{sortie} = \frac{T_{col} - \varepsilon_{RAS} \cdot T_{eau}}{1 - \varepsilon_{RAS}}$$

Avec

$T_{sortie}$ = Température des gaz en sortie du compresseur
$T_{col}$ = Température des gaz dans le collecteur d'admission
$T_{eau}$ = Température de l'eau du refroidisseur
$\varepsilon_{RAS}$ = Efficacité de refroidissement de l'échangeur d'air d'admission (RAS)

Le moyen de commande 23 est relié au moyen de calcul 22. Le moyen de calcul 23 effectue le calcul suivant :

$$T_{comp} = \frac{T_{sortie} \cdot \eta_{cpr}\left(\dfrac{P_{sortie}}{P_{comp}}, Q_{comp}\right)}{\left(\dfrac{P_{sortie}}{P_{comp}}\right)^{\frac{(\gamma_{air}-1)}{\gamma_{air}}} - 1 + \eta_{cpr}\left(\dfrac{P_{sortie}}{P_{comp}}, Q_{comp}\right)}$$

Avec

$T_{comp}$ = Température des gaz en entrée du compresseur
$T_{sortie}$ = Température des gaz en sortie du compresseur
$\eta_{cpr}$ = Rendement du compresseur
$P_{sortie}$ = Pression des gaz en sortie du compresseur
$P_{comp}$ = Pression des gaz en entrée du compresseur
$Q_{comp}$ = Débit des gaz en entrée du compresseur
$\gamma_{air}$ = Rapport des chaleurs spécifique à volume constant et à pression constante de l'air

Le moyen de calcul 13 du débit des gaz en entrée du compresseur est relié au capteur 18 de température et au capteur 19 de pression des gaz dans le collecteur d'admission par les connexion respectives 18a et 19a. Le moyen de calcul 13 effectue le calcul suivant :

$$Q_{comp} = 3600 \times \left[ \frac{P_{col}}{R \cdot T_{col}} \frac{V_{Cyl}}{2} \frac{N}{60} \eta_r\left(N, \frac{P_{col}}{R \cdot T_{col}}\right) - \frac{d}{dt}\left(\frac{P_{col} \cdot V_{sural}}{R \cdot T_{col}}\right) \right]$$

Avec

$R$ = Constante de l'air
$V_{cyl}$ = Cylindrée du moteur
$N$ = Régime de rotation du moteur
$\eta_r$ = Rendement volumétrique du moteur
$P_{col}$ = Pression des gaz dans le collecteur d'admission
$T_{col}$ = Température des gaz dans le collecteur d'admission
$V_{sural}$ = Volume du circuit de suralimentation compris entre la sortie du compresseur et l'entrée de la turbine

Le moyen de calcul 14 est relié au capteur 15 de température des gaz en sortie du refroidisseur, au capteur 16 de l'air admis dans le moteur et au capteur 17 de température des gaz à l'entrée du compresseur par les liaisons respectives 15a, 16a et 17a. Grâce également à la valeur de $(Q_{comp})$ estimée par le moyen 13, le moyen de calcul 14 détermine alors le débit $(Q_{air})$ d'air admis dans le moteur avec la formule suivante

$$Q_{air} = \frac{C_{p,ech} Q_{comp} \left( T_{comp} - T_{refroid} \right)}{C_{p,air} \left( T_{air} - T_{comp} \right) + C_{p,ech} \left( T_{comp} - T_{refroid} \right)}$$

Avec

$Q_{air}$ = Débit d'air estimé admis dans le moteur
$C_{p,air}$ = Chaleur spécifique de l'air
$C_{p,ach}$ = Chaleur spécifique des gaz d'échappement
$Q_{comp}$ = Débit des gaz en entrée du compresseur
$T_{refroid}$ = Température des gaz à la sortie du refroidisseur de la recirculation partielle des gaz d'échappement
$T_{air}$ = Température de l'air admis dans le moteur
$T_{comp}$ = Température des gaz à l'entrée du compresseur

La présente invention permet de définir un système et un procédé permettant de calculer, en l'absence de débitmètre, le débit d'air admis dans un moteur à combustion interne, équipé d'une recirculation des gaz d'échappement. Ce calcul est réalisé par l'unité de commande électronique grâce aux mesures de température et de pression réalisées par un ensemble de capteurs.

**Revendications**

1.  Système de commande d'un moteur (1) à combustion interne, équipé d'un turbocompresseur (3), d'un circuit de recirculation partielle des gaz d'échappement (EGR) et d'une unité de contrôle électronique (UCE) (11) comprenant un moyen de commande (12) du débit de la recirculation partielle des gaz d'échappement et des moyens de calcul recevant les signaux de capteurs de température et de pression, **caractérisé par le fait que** le circuit de recirculation partielle des gaz d'échappement est adapté comme une recirculation partielle des gaz d'échappements à basse pression, les gaz d'échappement étant prélevés en aval de la turbine et est équipé d'un refroidisseur (10), l'unité de commande électronique comprenant un moyen pour calculer le débit des gaz (13) en entrée du compresseur ainsi qu'un moyen pour calculer le débit d'air (14) admis dans le moteur, à partir des valeurs mesurées de la température (18) et de la pression (19) des gaz dans le collecteur d'admission (5).

2.  Système de commande selon la revendication 1 dans lequel le moyen de calcul du débit d'air (14) admis dans le moteur utilise des valeurs mesurées de la température (16) de l'air admis dans le moteur, de la température (17) des gaz à l'entrée du compresseur (3a), de la température (15) des gaz en sortie du refroidisseur (10) du circuit de recirculation partielle des gaz d'échappement basse pression et la valeur estimée par le moyen (13) de calcul du débit des gaz en entrée du compresseur (3a).

3.  Système de commande selon l'une des revendications 1 ou 2 dans lequel le circuit de recirculation partielle des gaz d'échappement comprend un volet d'échappement (8) et dans lequel l'unité de commande électronique (11) comprend également un moyen (21) de détermination de la température des gaz en sortie du refroidisseur (10) du circuit de recirculation partielle des gaz d'échappement à basse pression en fonction de la température mesurée (20) des gaz en amont du volet d'échappement (8).

4. Système de commande selon l'une des revendications 1 à 3, dans lequel l'unité de commande électronique (11) comprend également un moyen de détermination (22) de la température des gaz en sortie du compresseur (3a) en fonction de la température mesurée (18) des gaz dans le collecteur d'admission (5).

5. Système de commande selon la revendication 4, dans lequel l'unité de commande électronique (11) comprend également un moyen de détermination (23) de la température des gaz à l'entrée du compresseur (3a) en fonction de la température estimée (22) des gaz en sortie du compresseur (3a).

6. Système de commande selon la revendication 1, comprenant un moyen de détermination (23) de la température des gaz à l'entrée du compresseur (3a) et un moyen (21) de détermination de la température des gaz en sortie du refroidisseur (10) du circuit de recirculation partielle des gaz d'échappement à basse pression, dans lequel le moyen de calcul (14) du débit d'air admis dans le moteur utilise une valeur mesurée de la température (16) de l'air admis dans le moteur et des valeurs estimées de la température (23) des gaz à l'entrée du compresseur (3a), de la température (21) des gaz en sortie du refroidisseur (10) du circuit de recirculation partielle des gaz d'échappement à basse pression et la valeur estimée du débit (13) des gaz en entrée du compresseur (3a).

7. Procédé de commande d'un moteur (1) à combustion interne, suralimenté avec recirculation partielle commandée, adaptée comme recirculation partielle à baisse pression, le gaz d'échappement étant prélevés en aval de la turbine et refroidissement des gaz d'échappement (EGR), **caractérisé par le fait que** le débit des gaz en entrée du compresseur et le débit d'air admis dans le moteur sont estimes, à partir de la température et de la pression des gaz dans le collecteur d'admission (5),

8. Procédé de commande d'un moteur selon la revendication 7 **caractérisé par le fait que** le débit d'air admis est estimé à partir du débit des gaz estimé en entrée du compresseur de suralimentation, de la température mesurée des gaz d'échappement recyclés après refroidissement, de la température mesurée de l'air admis dans le moteur, de la température mesurée des gaz d'entrée du compresseur, de la température mesurée et de la pression mesuré des gaz dans le collecteur d'admission.

9. Procédé de commande selon la revendication 7 **caractérisé par le fait que** le débit d'air admis dans le moteur est estimé par calcul à partir des valeurs estimées de la température des gaz d'échappement recyclés après refroidissement, de la température des gaz à l'entrée du compresseur, de la température mesurée de l'air admis dans le moteur, de la température mesurée et de la pression mesurée des gaz dans le collecteur d'admission.

**Claims**

1. System for controlling an internal combustion engine (1) fitted with a turbocharger (3), with a circuit for the partial recirculation of exhaust gases (EGR) and with an electronic control unit (ECU) (11) comprising a means (12) for controlling the flow rate of the partial recirculation of the exhaust gases and computing means receiving the signals from the temperature and pressure sensors, **characterized in that** the circuit for the partial recirculation of the exhaust gases is adapted as a partial recirculation of the exhaust gases at low pressure, the exhaust gases being drawn off downstream of the turbine and is fitted with a cooler (10), the electronic control unit comprising a means (13) for computing the flow rate of gases entering the compressor and a means (14) for computing the flow rate of air taken into the engine, based on measured values of the temperature (18) and of the pressure (19) of the gases in the inlet manifold (5).

2. Control system according to Claim 1, in which the means (14) for computing the flow rate of air taken into the engine uses measured values of the temperature (16) of the air taken into the engine, of the temperature (17) of the gases at the inlet of the compressor (3a), of the temperature (15) of the gases at the outlet of the cooler (10) of the circuit for the partial recirculation of the exhaust gases at low pressure and the value estimated by the means (13) for computing the flow rate of the gases at the inlet of the compressor (3a).

3. Control system according to one of Claims 1 and 2, in which the circuit for the partial recirculation of the exhaust gases comprises an exhaust flap (8) and in which the electronic control unit (11) also comprises a means (21) for determining the temperature of the gases at the outlet of the cooler (10) of the circuit for the partial recirculation of the exhaust gases at low pressure as a function of the measured temperature (20) of the gases upstream of the exhaust flap (8).

4. Control system according to one of Claims 1 to 3, in which the electronic control unit (11) also comprises a means (22) for determining the temperature of the gases at the outlet of the compressor (3a) as a function of the measured temperature (18) of the gases in the inlet manifold (5).

5. Control system according to Claim 4, in which the electronic control unit (11) also comprises a means (23) for determining the temperature of the gases at the inlet of the compressor (3a) as a function of the estimated temperature (22) of the gases at the outlet of the compressor (3a).

6. Control system according to Claim 1, comprising a means (23) for determining the temperature of the gases at the inlet of the compressor (3a) and a means (21) for determining the temperature of the gases at the outlet of the cooler (10) of the circuit for the partial recirculation of the exhaust gases at low pressure, in which the means (14) for computing the flow rate of air taken into the engine uses a measured value of the temperature (16) of the air taken into the engine and of the estimated values of the temperature (23) of the gases at the inlet of the compressor (3a), of the temperature (21) of the gases at the outlet of the cooler (10) of the circuit for the partial recirculation of the exhaust gases at low pressure and the estimated value of the flow rate (13) of the gases at the inlet of the compressor (3a).

7. Method for controlling a turbocharged internal combustion engine (1) with controlled partial recirculation, adapted as partial recirculation at low pressure, the exhaust gases being drawn off downstream of the turbine, and cooling of the exhaust gases (EGR), **characterized in that** the flow rate of the gases at the inlet of the compressor and the flow rate of air taken into the engine are estimated based on the temperature and the pressure of the gases in the inlet manifold (5).

8. Method for controlling an engine according to Claim 7, **characterized in that** the flow rate of air taken in is estimated based on the estimated flow rate of the gases at the inlet of the turbocharging compressor, on the measured temperature of the recycled exhaust gases after cooling, on the measured temperature of the air taken into the engine, on the measured temperature of the gases at the inlet of the compressor, on the measured temperature and on the measured pressure of the gases in the inlet manifold.

9. Control method according to Claim 7, **characterized in that** the flow rate of air taken into the engine is estimated by computation based on estimated values of the temperature of the recycled exhaust gases after cooling, on the temperature of the gases at the inlet of the compressor, on the measured temperature of the air taken into the engine, on the measured temperature and the measured pressure of the gases in the inlet manifold.

**Patentansprüche**

1. System zur Steuerung eines Verbrennungsmotors (1), der mit einem Turbokompressor (3), mit einem Kreislauf zur teilweisen Abgasrückführung (EGR) und mit einer elektronischen Kontrolleinheit (UCE) (11) ausgestattet ist, die eine Steuereinrichtung (12) der Menge der teilweisen Abgasrückführung und Recheneinrichtungen enthält, die die Signale von Temperatur- und Druckfühlern empfangen, **dadurch gekennzeichnet, dass** der Kreislauf zur teilweisen Abgasrückführung als eine teilweise Abgasrückführung auf niedrigem Druck eingestellt ist, wobei die Abgase hinter der Turbine entnommen werden, und mit einem Kühler (10) ausgestattet ist, wobei die elektronische Steuereinheit eine Einrichtung, um die Menge der Gase (13) am Eingang des Kompressors zu berechnen, sowie eine Einrichtung enthält, um die in den Motor angesaugte Luftmenge (14) ausgehend von den gemessenen Werten der Temperatur (18) und des Drucks (19) der Gase im Ansaugkrümmer (5) zu berechnen.

2. Steuersystem nach Anspruch 1, bei dem die Einrichtung zur Berechnung der in den Motor angesaugten Luftmenge (14) gemessene Werte der Temperatur (16) der in den Motor angesaugten Luft, der Temperatur (17) der Gase am Eingang des Kompressors (3a), der Temperatur (15) der Gase am Ausgang des Kühlers (10) des Kreislaufs zur teilweisen Niederdruck-Abgasrückführung und den durch die Einrichtung (13) zur Berechnung der Gasmenge am Eingang des Kompressors (3a) geschätzten Wert verwendet.

3. Steuersystem nach einem der Ansprüche 1 oder 2, bei dem der Kreislauf zur teilweisen Abgasrückführung eine Abgasklappe (8) enthält, und bei dem die elektronische Steuereinheit (11) ebenfalls eine Einrichtung (21) zur Bestimmung der Temperatur der Gase am Ausgang des Kühlers (10) des Kreislaufs zur teilweisen Niederdruck-Abgasrückführung abhängig von der gemessenen Temperatur (20) der Gase vor der Abgasklappe (8) enthält.

4. Steuersystem nach einem der Ansprüche 1 bis 3, bei dem die elektronische Steuereinheit (11) ebenfalls eine Einrichtung zur Bestimmung (22) der Temperatur der Gase am Ausgang des *Kompressors* (3a) abhängig von der gemessenen Temperatur (18) der Gase im Ansaugkrümmer (5) enthält.

5. Steuersystem nach Anspruch 4, bei dem die elektronische Steuereinheit (11) ebenfalls eine Einrichtung zur Bestimmung (23) der Temperatur der Gase am Eingang des Kompressors (3a) abhängig von der geschätzten Temperatur (22) der Gase am Ausgang des Kompressors (3a) enthält.

6. Steuersystem nach Anspruch 1, das eine Einrichtung zur Bestimmung (23) der Temperatur der Gase am Eingang des Kompressors (3a) und eine Einrichtung (21) zur Bestimmung der Temperatur der Gase am Ausgang des Kühlers (10) des Kreislaufs zur teilweisen Niederdruck-Abgasrückführung enthält, bei dem die Einrichtung zur Berechnung (14) der in den Motor angesaugten Luftmenge einen gemessenen Wert der Temperatur (16) der in den Motor angesaugten Luft und geschätzte Werte der Temperatur (23) der Gase am Eingang des Kompressors (3a), der Temperatur (21) der Gase am Ausgang des Kühlers (10) des Kreislaufs zur teilweisen Niederdruck-Abgasrückführung und den geschätzten Wert der Menge (13) der Gase am Eingang des Kompressors (3a) verwendet.

7. Verfahren zur Steuerung eines aufgeladenen Verbrennungsmotors (1) mit gesteuerter teilweiser Rückführung, die als teilweise Niederdruck-Rückführung eingestellt ist, wobei die Abgase hinter der Turbine entnommen werden, und Kühlung der Abgase (EGR), **dadurch gekennzeichnet, dass** die Menge der Gase am Eingang des Kompressors und die in den Motor angesaugte Luftmenge ausgehend von der Temperatur und dem Druck der Gase im Ansaugkrümmer (5) geschätzt werden.

8. Steuerverfahren eines Motors nach Anspruch 7, **dadurch gekennzeichnet, dass** die angesaugte Luftmenge ausgehend von der geschätzten Menge der Gase am Eingang des Turboladers, der gemessenen Temperatur der nach der Kühlung rückgeführten Abgase, der gemessenen Temperatur der in den Motor angesaugten Luft, der gemessenen Temperatur der Eingangsgase des Kompressors, der gemessenen Temperatur und dem gemessenen Druck der Gase im Ansaugkrümmer geschätzt wird.

9. Steuerverfahren nach Anspruch 7, **dadurch gekennzeichnet, dass** die in den Motor angesaugte Luftmenge durch Berechnung ausgehend von den geschätzten Werten der Temperatur der nach der Kühlung rückgeführten Abgase, der Temperatur der Gase am Eingang des Kompressors, der gemessenen Temperatur der in den Motor angesaugten Luft, der gemessenen Temperatur und dem gemessenen Druck der Gase im Ansaugkrümmer geschätzt wird.

# FIG.1

## FIG.2

EP 2 061 961 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2789731
- FR 2824596
- FR 2833648